# EUROPEAN PATENT APPLICATION

(11) **EP 1 655 980 A2**
(43) Date of publication of application: **10.05.2006**
(21) Application number: 05256429.1
(22) Date of filing: 17.10.2005
(51) Int. Cl.: H04Q 7/36

(54) **System and method for determining user-perceived holes in wireless communciation coverage areas**

(30) Priority: 01.11.2004 US 978707
(71) Applicant: Agilent Technologies, Inc., Palo Alto, CA 94306 (US)
(72) Inventor: Hamilton, Bruce, Menlo Park California 94025 (US); Tatman, Lance A., Fremont California 94536 (US)
(74) Representative: Exell, Jonathan Mark

(57) **Abstract**

There are disclosed systems and methods for inferring "holes" in wireless communication coverage areas. These holes are determined based on the user's view of coverage at various locations within geographical areas covered by a broadcast signal. In one embodiment, the wireless coverage area is a cellular network (600) and the holes are determined by actual cellular phone (50) usage within the network. Location and direction of travel data pertaining to a cellular phone's usage is stored and refined within the cellular phone (30) so as to define areas where the user selects to place calls or selects to terminate calls. The data stored within the mobile device is from time to time communicated (331) to the central wireless broadcast system (602). By collecting such data from a plurality of such devices, the central system can map coverage holes (71) from a user's perspective.

## Description

### CROSS-REFERENCE TO RELATED APPLICATIONS AND PATENTS

The present application is related to co-pending, and commonly-assigned U.S. Patent Application No. 10/909,814, Attorney Docket No. 10040182-1 filed on August 2, 2004, entitled "SYSTEM AND METHOD FOR WIRELESS COVERAGE DETECTION" which is hereby incorporated by reference herein.

### TECHNICAL FIELD

This disclosure relates to wireless coverage detection and more particularly to systems and methods for using mobile devices for determining user-perceived holes in wireless communication coverage areas.

### BACKGROUND OF THE INVENTION

Providers of wireless services, such as, for example, cellular telephone service, currently detect holes in their coverage in two ways, drive testing throughout the coverage area and customers calling to report problems. One disadvantage of drive testing is that the RF field is undersampled in time, since each sample covers only a fraction of a second per month at any one location. Another disadvantage of drive testing is that the RF field is also undersampled in space, because most of the major roads are not driven their entire length and only some of the minor roads are driven. Drive testing misses all locations without a road, such as parks, stadiums, homes, offices, conference centers, etc. While drive testing attempts to weigh the samples by their importance (making sure to cover major roads, for example) this weighing is subjective and ad hoc, and applies a single weighing for all customers. In addition, drive testing is labor-intensive and requires a truck full of expensive equipment. A disadvantage of having customers call in complaints is that such a system is subjective and undersamples the signal even more seriously than does drive testing, both in time and space. In addition, called-in information is usually imprecise and it is also labor-intensive to record the called-in data.

### BRIEF SUMMARY OF THE INVENTION

There is discussed systems and methods for discovering holes in wireless communication coverage areas. These holes are determined based on the user's view of coverage at various locations within geographical areas covered by a broadcast signal. Thus, even if the wireless signal is technically acceptable at a given location, but users select not to communicate at that location, that location is inferred to be a hole. In one embodiment, the wireless coverage area is a cellular network and the holes are determined by actual cellular phone usage within the network. Location and direction of travel data pertaining to a cellular phone's usage is stored and refined within the cellular phone so as to define areas where the user selects to place calls or selects to terminate calls. The data stored within the cellular phone is from time to time communicated to the central wireless broadcast system. Refinement of the data in the cellular phone allows for long storage periods so that signal quality can be reported over long time spans. By collecting such data from a plurality of such devices, the central system can map coverage holes from a user's perspective.

In one embodiment, a cellular system monitors at least some of the cellular phones operating within its coverage area in order to locate areas where the signal strength is either below user's acceptance levels or users decide not to place calls. Holes in this context may be inferred from user's behavior and their discovered location can be used by the cellular system provider to better adjust its coverage area.

### BRIEF DESCRIPTION OF THE DRAWINGS

FIGURE 1A shows geographical areas defined by a mobile device;

FIGURES 1B, 1C, and 1D show movement, expansion and contraction of the geographical area of FIGURE 1;

FIGURES 2, 3, and 4 show flow charts of one embodiment of system operations;

FIGURE 5 shows one embodiment of a mobile device;

FIGURE 6 shows one embodiment of a cellular system using the systems and methods described herein;

FIGURE 7 shows one example of a user entering and leaving a coverage hole;

FIGURE 8 shows one example where a user's path crosses on edge of a coverage hole;

FIGURE 9A, 9B, and 10 illustrate examples of each cell maintaining a count of coverage starts and stops on a directional basis; and

FIGURES 11-13 illustrate coalescing of the cells adjacent to a boundary.

### DETAILED DESCRIPTION OF THE INVENTION

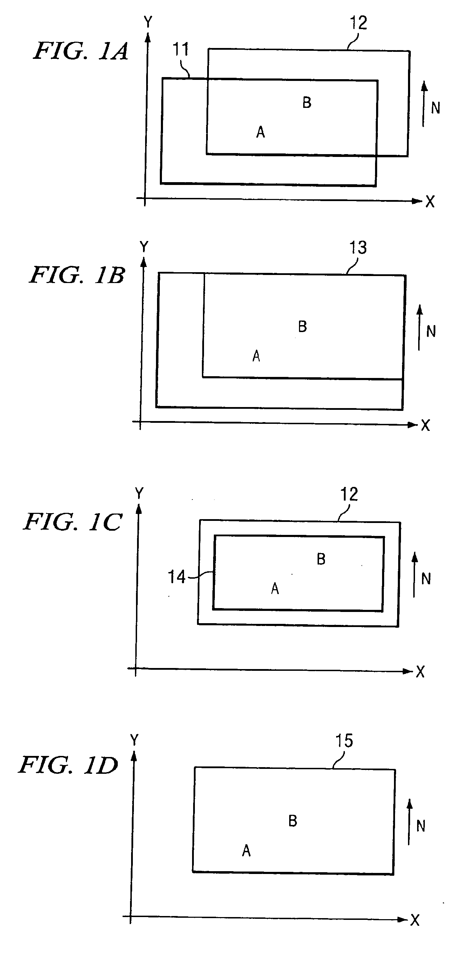

One embodiment for determining holes with wireless coverage areas and for refining the spatial boundaries of the measured holes so as to be able to store the data in a limited memory, such as a cellular phone, is shown in the above-detailed co-pending application. A discussion of FIGURES 1A through 7 of said application follows.

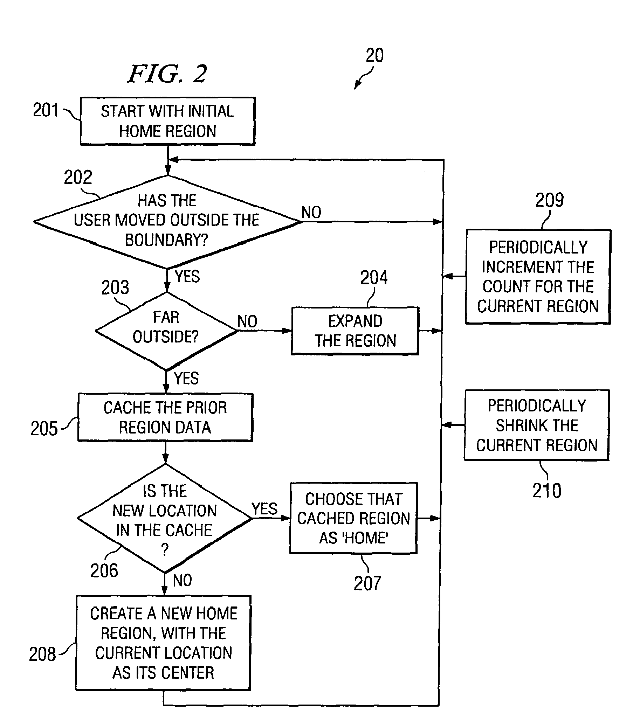

FIGURE 1A shows geographical area 11 where the user of a mobile device (for example, a cellular telephone) spends most of his/her time. The letter 'A' is positioned at the center of geographical area 11. For discussion purposes, this is called the 'home' region and in discussing FIGURES 1A-1D the method discussed with respect to FIGURE 2 will be used.

Assume now that the user moves a little bit and spends his/her time in region 12 shown with a 'B' at its center. In this situation, region 11 will expand. FIGURE 1B shows the expanded region 13. In FIGURE 1B the new home region has expanded on the north and east.

The expansion amount could be by just enough to include the user's new location or could be by an integral number of bins (cells), or by doubling the original size, etc.

FIGURE 1C shows an example where the user remains within the confines of region 12 and, periodically, as will be discussed hereinafter, the region is reduced. For discussion purposes herein, it should be noted that acts performed periodically can be performed at regular intervals or at random intervals. In this example, region 13 is reduced on all sides to form region 14.

FIGURE 1D shows that the home region, now region 15, has again been expanded on the north and east to include areas of user movement. The home region now includes the new areas of user movement, and omits the areas where the user no longer goes. The home region has effectively moved to follow the user from A to B.

When the user goes far outside the home region (e.g., flies somewhere), the coordinates (and the data associated with the coordinates) are cached (home coordinate cache) and a new temporary region is created.

In addition, the system periodically increments a count associated with the region the user is currently in and periodically deletes from the cache the region with the smallest count. When one region count exceeds some threshold, the system has established a home region. Using this method, the system establishes which cached region is the user's home region. There may be a tie, or a near-tie, for first place, depending on the usage pattern. However, this does not matter since the important thing is to choose a region where the user spends a lot of time. In the embodiment shown, it takes four numbers to store the region information. The numbers may be, for example, latitude/longitude, or distance (in bins, or some other unit) plus an angle from a known tower, or some other coordinate system (which need not be Cartesian).

By using more numbers: five (2 locations + angle) for a rotated rectangle, six for a triangle, eight for an arbitrary quadrilateral, etc. less restrictive region boundaries can be accommodated. To appreciate the value of less restrictive representations, imagine trying to represent a highway 100 feet wide and 20 miles long, running at a 45° angle. If the rectangle must have horizontal and vertical sides, it will be 14 miles on a side. If the system allows it to be rotated 45°, it only needs to be 100 feet on one side. The cache size of the home coordinate cache (as discussed above) can be as small as desired, as long as it contains at least two elements. The larger the cache, the greater the chance of converging quickly on home.

FIGURE 2 shows one embodiment of a flowchart showing system and method 20 for determining the home region for storing data pertaining to signal strength. Process 201 starts with an initial home region.

Process 202 determines whether the user has moved outside of the home region. If the user has moved outside the home region, process 203 determines if the user has moved beyond a given distance. If not, then the boundary is expanded via process 204 as discussed above. If the user has moved beyond a given distance, then the prior region's data is stored in a cache via process 205. Process 206 then determines if the new location is in cache. If so, that cached region becomes the new home region. If not, then process 208 creates a new home region.

Process 209 periodically increments the count for the current region and process 210 periodically shrinks the current region. Either or both of these actions can be performed periodically, such as every minute, every hour, every day, etc., as desired. While uniform shrinking is discussed, an important factor is that shrinkage (whether uniform or nonuniform) is unbiased over the long run. Thus, the shrinkage need not be uniform across the region, and one side could be reduced at one time and a different side reduced at another time. The side or sides to be reduced could be determined in order (north, south, east, west, etc.) or in random order, and any number of sides can be reduced at a time.

As discussed above, this system will continually refine itself so that if a user has moved to a new home region, the new home region will soon become the official home region and the system will continue without anything being done by either the user or the central system to which the device will eventually report. In addition, as discussed above, the size of the area will continually refine downward (or upward) so that as the user's movements reduce (or increase) the home region also reduces (or increases).

### DETERMINING HOLES FROM A USER'S PERSPECTIVE

As will now be discussed, it is possible to infer from users' behaviors that there are certain geographic areas that they prefer to not use. For example, if a cellular service provider's coverage has a relatively large and stationary hole in a certain location and a user traverses that location regularly, the user often learns to avoid the hole either by waiting until he/she has left the hole area before placing a call or by hanging up a call just before entering the hole. By keeping track of one or more users' behavior patterns over time, an inference can be drawn that the location where users are not on their phones is a hole in coverage. The data pertaining to usage as a function of location is gathered by the mobile device and inferences can be drawn either by the device or by the provider based on data sent from the device to the provider.

Phase 1: Find the user's home region as discussed above with respect to FIGURES 1A through 2 above.

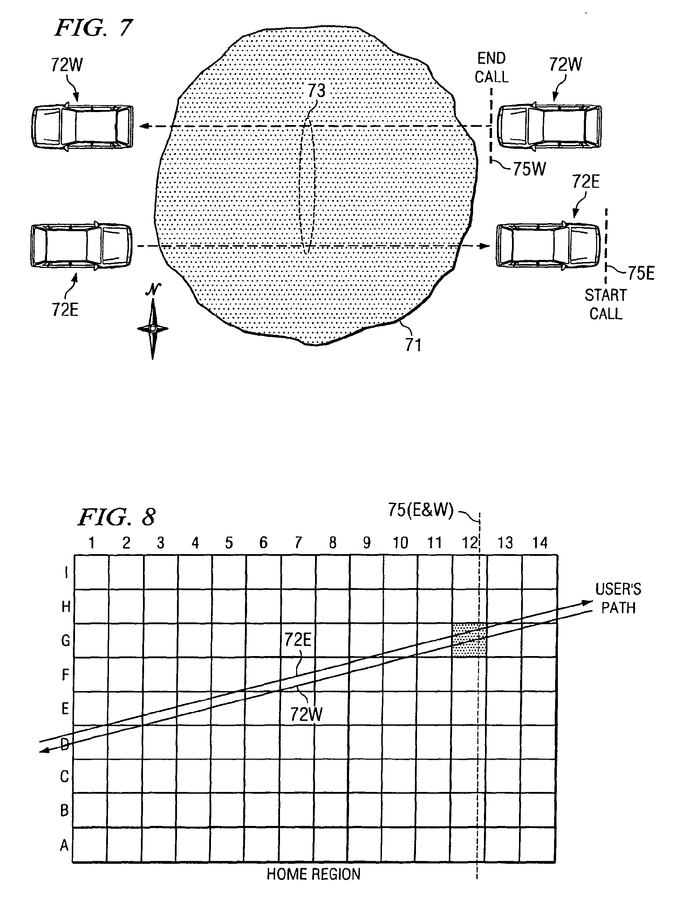

Phase 2: Learn where the partial edges are of each user-perceived coverage hole. FIGURE 7 shows road 73 passing through an area such as area 71, where users tend to turn off (end) their wireless communications on entry or tend to begin conversations on exit. As will be seen, the determination of the edges of coverage holes is based upon actual data pertaining to user initiated ending of calls and beginning of calls as stored in user's phone(s). This area will be inferred to be a coverage hole. On the east side of hole 71 westbound user 72W typically hangs up (ends call) when crossing the hole boundary shown as line 75W. This same user, when going in the opposite direction (72E), frequently places calls shortly after crossing the east boundary (shown as line 75E) of hole 71. Note that these calls could begin and end because the signal is gone (a tunnel, a garage, etc.) but also because the user simply does not desire to communicate at a certain location. Users may regularly start/end calls at the boundary of a coverage hole which is caused by well-known features of the environment. These features are detectable by service providers in a number of ways, such as drive tests, etc. For these types of physical holes, garages, tunnels, etc., the procedures discussed herein are not necessary, but no harm is done

Often, users will regularly start/end calls at locations which have nothing to do with a coverage hole. For example, a user may call home when he/she leaves work, but that does not mean there is a coverage hole in front of the user's work place. These "holes" will tend to average out across users, but even if they do not, they should be explainable by looking at a map. Also, users will start/end calls at irregular times and places, and these irregular times and places will be ignored since, as will be discussed, the system and methods discussed herein pay attention only to differences which remain sharp even when accumulated over many measurements. In other situations, users may regularly start/end calls at a boundary of a coverage hole which the service provider's measurements do not show. This is important because if the user thinks the coverage is not good enough, then the customer is not happy, or perhaps a safety issue or some other factor is present. Accordingly, even when wireless coverage at a location may be technically acceptable, something may influence a user, or users, to not communicate during a transit of that location. Thus, the principle situation in which a service provider will find these procedures useful is the case in which the service provider's other methods (simulation, drive testing) indicate that service is fine, but users repeatedly avoid placing or continuing calls in certain places. Since it is the users, not the service provider, who are the ultimate judge of what is satisfactory, the procedures discussed herein yield a truer picture of where the provider's service is not good enough. The following discussion will enable one skilled in the art to both identify such region(s) where users tend to end (or start) communications, and to do so with data gathered and stored over long periods inside mobile devices.

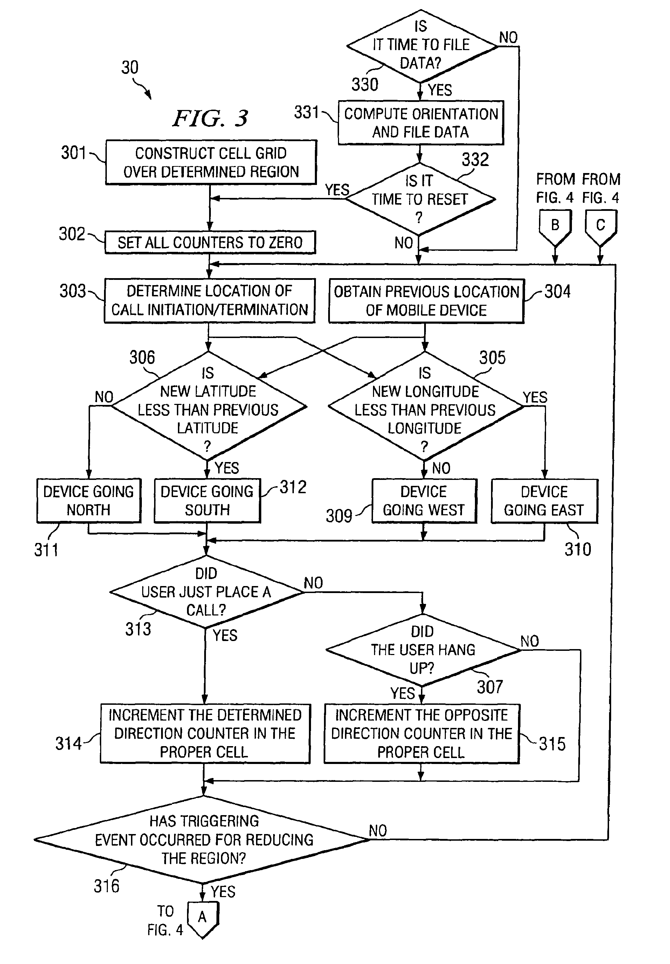

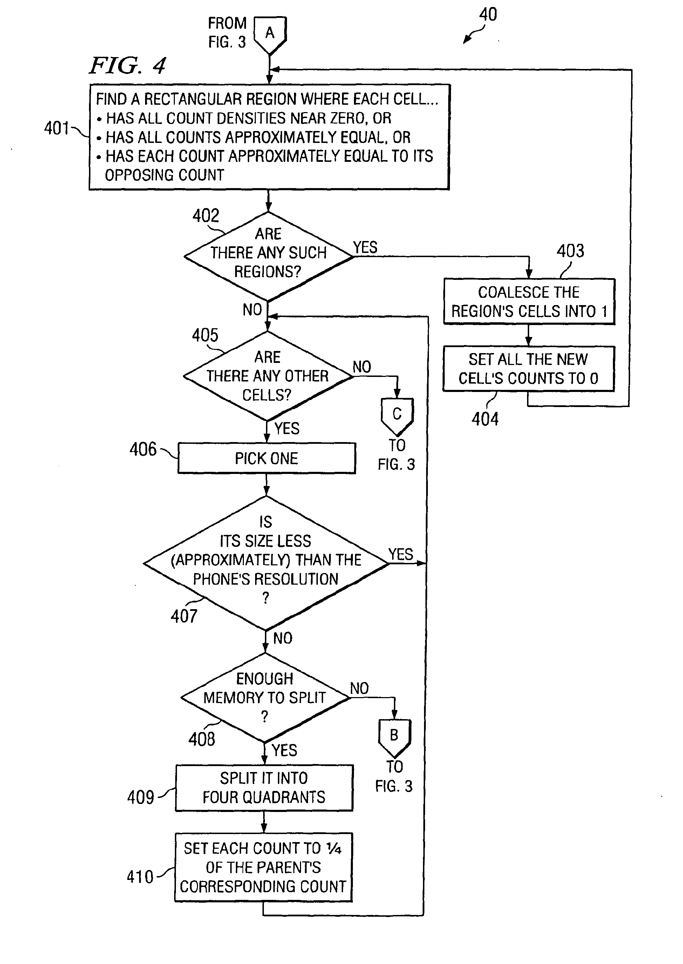

Step 1: A grid is constructed over the home region and is made as fine as permitted by the desired memory usage of the mobile device. The grid corresponds to geographical area traversed by a mobile device. Memory in each such mobile device is associated with each grid cell. FIGURE 3 shows one embodiment 30 of a system and method for constructing a grid of cells describing the measurement of the phenomenon, for example, quality of wireless coverage as perceived by the user. Process 301 constructs a cell grid over the region where the user presently is located. Note that the memory can be different for different mobile devices, and thus, the size of grid area or the refinement therein can be different.

FIGURE 8 shows one example of such a grid where eastbound user 72E's path crosses the east edge (75E) in cell G12. Calls and hang-ups are recorded in each mobile device with respect to these cells. Coverage hole 71 (FIGURE 7) has other edges and, may have other roads through it, and each of those edges and each of those roads will be treated as described herein. However, for clarity we will consider just one edge, namely edge 75(E&W), shown in cell G12.

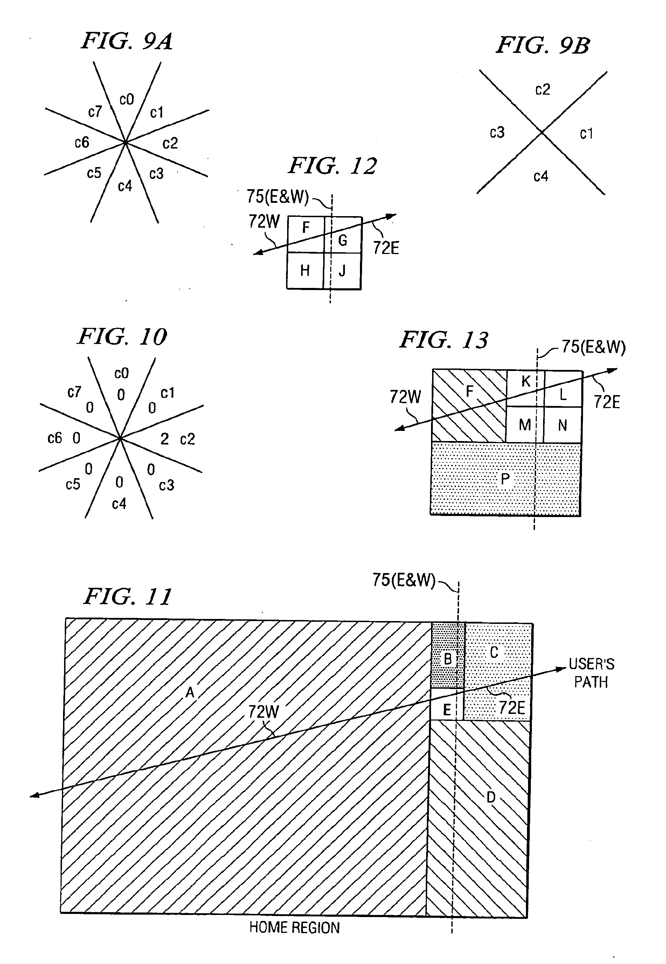

Step 2: At each cell, a set of counters is identified, and in process 302 (FIGURE 3) each counter is set initially to zero and each counter represents a compass direction. This is shown in FIGURE 9A, where c2 represents east, c1 represents northeast, etc.

FIGURE 9B shows four counters, with counter c1 covering east, east by northeast, east by southeast; counter c2 covering north, north by northeast, north by northwest, etc. The number of counters ideally should be greater than four and should be, if possible, an even number.

Step 3: Whenever the user initiates a call, the current location (or if none is available the next measured location) is noted as shown in process 303, FIGURE 3. This location, together with a recent history of user location, process 304, is used to compute a direction the user is traveling. This can be the user's last n locations for some small value of n. In this way, even if the user is stationary, the system will know which direction the user has been heading. One embodiment for accomplishing such a determination is to use the latitude and longitude of the newly obtained location and the latitude and longitude of the previous location and to determine (process 305) if the newly obtained longitude is less than the previous longitude. If so, then process 310 determines that the device is going east. If not, then process 309 determines that the device is going west. Process 306 determines if the newly obtained latitude is less than the previous latitude. If it is, then process 312 determines the device is going south. If it is not, then process 311 determines the device is going north. For example, if the user (device) is going north and there are four counters, increment the 'North' counter (c2 in FIGURE 9B). If an eight cell count is used, then cell c0 (FIGURE 9A) would be incremented as shown by either process 314 or by process 315. If the user is exactly on the boundary between two directions, randomly decide which counter to increment. Process 314 is used if the user placed the call, as determined by process 313.

Step 4: Whenever the user ends a call by hanging up (rather than by having the call dropped, or the other party hanging up), as determined by process 307, the opposite direction counter is incremented as shown by process 315, FIGURE 3. For example, if the user is going west and there are eight counters (FIGURE 9A), increment east counter c2. If the user is exactly on the boundary between two directions, randomly decide which counter to increment.

FIGURE 10 shows one example after placing one call when traveling east, and hanging up on one call when traveling west. The counters for a cell (such as cell G12, FIGURE 8) would be as shown in FIGURE 10, with a 2 in counter c2.

Step 5: After a period of time (which may be a time interval, or when the count with the largest value exceeds a threshold, or when the sum of counts exceeds a threshold or even random), process 316, FIGURE 3 initiates a process for coalescing or splitting grid elements of a particular region.

FIGURE 4 shows one embodiment 40 for performing such coalescing and splitting. As shown in FIGURE 4, process 401 begins the process of coalescing by finding rectangular regions where the counts in each cell meet any of the following criteria:
(a) The count densities are all approximately zero (or much smaller than the largest count densities, e.g. in the 20^{th} percentile). These are cells where the user does not (at least for the monitored period) place or end calls.
(b) The counts are all approximately equal to each other, that is, their difference is much smaller (in the sense discussed above in (a)) than the largest counts. These are cells where the user is likely to be traveling in any direction.
(c) Opposing counts are approximately equal (in the sense discussed in (a) above). These are cells where the user initiates calls as often going in one direction as in the opposite direction, and ends calls similarly.

Process 402 determines if there are any such rectangular regions. If there are, then process 403 coalesces the found region into a single grid element and process 404 sets all counts in the new grid element to zero. The resulting structure is no longer a grid, but can be efficiently represented as a quadtree. See for example U.S. Patent Application No. 10/909, 814, filed on August 2, 2004, entitled "SYSTEM AND METHOD FOR WIRELESS COVERAGE DETECTION," which is hereby incorporated by reference herein. In our example, assume that the only events in the home region are calls placed just after crossing the boundary (grid G12, FIGURE 8) going east (72E), or calls ended just before crossing the boundary going west (72W). Then the new region would look as shown in FIGURE 11. New region A is formed by coalescing the 9x11 cells (A1 - I11) west of the shaded cell (G12); B is formed by coalescing the two cells (H12, I12) north of cell G12; C by coalescing the 2x2 cells (H13 - I14) to the northeast and the two cells (G13, G14) to the east; and D by coalescing the six cells (A12-F12) to the south of region E and the 6x2 cells (A13 - F14) to the southeast of region E. Notice that 125 cells (regions A, B, C and D) have been coalesced into 4. This is an extreme example, but it is expected that the regions (region E in our example) not coalesced in this step will be a small subset of the whole, since they correspond to places where the user frequently places a call while traveling in one direction, and/or frequently hangs up when traveling in the opposite direction. Thus, this step will free up a significant amount of memory for the next steps.

Step 6: If process 402 determines that there are no more regions which meet the criteria of process 401, then process 405 determines if there are any other cells. If so, process 406 selects one such cell and process 407 determines if the selected cell size is near the resolution of the phone's location (e.g. 4x the resolution). If the cell size is smaller than the phone's resolution, then process this cell as described in phase 3, i.e., skip the rest of this step, and when appropriate, send the data from the unsplit cells to the service provider. The reason for this is that a phone knows its own location with some finite precision (100 feet, 100 meters, 1 inch). If the size of the grid element is equal to that precision or smaller, then it will not do any good to split the grid element into quadrants because the phone would not know which quadrant it was in, and thus, the recorded data for the quadrant would be random at best. For example (using a one-dimensional example), suppose locations are measured in feet from some origin, and the phone has 10-foot resolution. The phone then reports its location as 0 feet, 10 feet, 20 feet, 30 feet, etc. Suppose there is a grid element at the 20-30 foot position, and suppose its size is equal to the resolution, namely 10 feet. If this is split in two (two, rather than four, because this is a one-dimensional example), then the left half (say) would span 20-24 feet and the right half would span 25-29 feet. But the phone never reports locations in the 25-29 foot range - it always jumps from 20 feet to 30 feet. Step 6 says that if a user is in this situation, or near it, then skip the rest of phase 2 for this cell, i.e., skip step 7 in which the cell is split.

Step 7: If the cell size is not smaller than the phone's resolution and if process 408 determines that there is enough memory to split the cell, then, still following the quadtree representation, split it into four quadrants as shown by process 409. In each quadrant, as shown by process 410, set each counter to ¼ of the count in the parent's corresponding counter. Thus, cell E of FIGURE 11 would become cells F, G, H and J as shown in FIGURE 12. If, at any point in this step, there is not enough memory to split a cell, then process that cell as described in Phase 3. This step focuses in on the boundary between good and bad areas, and on which side is good/bad. In principle, that boundary can be arbitrarily detailed; but this step constructs only as much detail as possible in the available memory. There will be imprecision in this estimate, since users will not always start or end calls in exactly the same place as shown by lines 75E and 75W (FIGURE 7). This fact is captured in steps 5-7 since when the cell size is about the same as the imprecision, the cell will not meet the criterion for coalescing, and will also not meet the criterion for splitting. In effect then, the size of the cell sent to the service provider will reflect the imprecision. Repeat step 6 until all cells have been examined.

Step 8: Repeat from step 3. For example, after coalescing, cell F would be unchanged and cells G, H, and J would become cells K, L, M, N, P and appear as shown in FIGURE 13.

The system should not go back to step 3 if one or more of the counters is near overflow, since this could mean that measurements have been taken for a long time and the overall situation may have changed. In such a situation, the procedure should start over from Phase 1.

Phase 3: In phase 3, cells are processed to provide the location and orientation of part of a boundary between good and bad coverage. Phase 3 is shown in FIGURE 3, processes 330-332 wherein process 330 determines if it is time to file the data with the central system. If it is, then compute the orientation of the boundary as follows:
1. Compute a precise orientation, using the relative values in the counters (which correspond to compass directions). Any robust method will do: if one has a significantly larger count than the others, choose that; or a center-of-mass computation could be used; or the direction with as many counts to the left as to the right can be selected; etc.
2. Send the location and orientation to the service provider. Boundary segments are not coalesced in the phone, since the provider has information from many phones, and also has more computing power than does the mobile device.
3. Set all the cell's counters to zero and continue with Phase 2.

Once the boundary is computed then this set of cells is sent with the data, via process 331, from the cellular phone to the central system. This transfer can occur periodically, randomly, or on command from the central system, and, this time can be once a year, or every several months, or sooner as desired. When this is complete, the system triggers process 302 and phase 2 of embodiment 30 will repeat.

Situations where calls are placed or terminated (or both) while the user is stationary can be addressed by adjusting the way the location history is maintained as discussed above. However, if the time of a call is short, data pertaining to that call is simply not stored. If it had been a user perceived hole, the user most likely would not have attempted to obtain service, i.e., would not have placed the call.

To obtain good statistics, a mobile device must collect data over many calls and many crossings of a boundary. This means that it should have counters which can count fairly high (a few thousand, say). If eight counters per grid element are used, then a 250x250 grid over the home region using 2-byte counters results in 1 megabyte of counters. This can be improved by using 1-byte counters with their range extended as described in Morris, Robert "Counting Large Number Of Events In Small Registers" Communications of the ACM, Volume 21 Number 10, pp. 841-842, October 1978, which is hereby incorporated by reference herein.

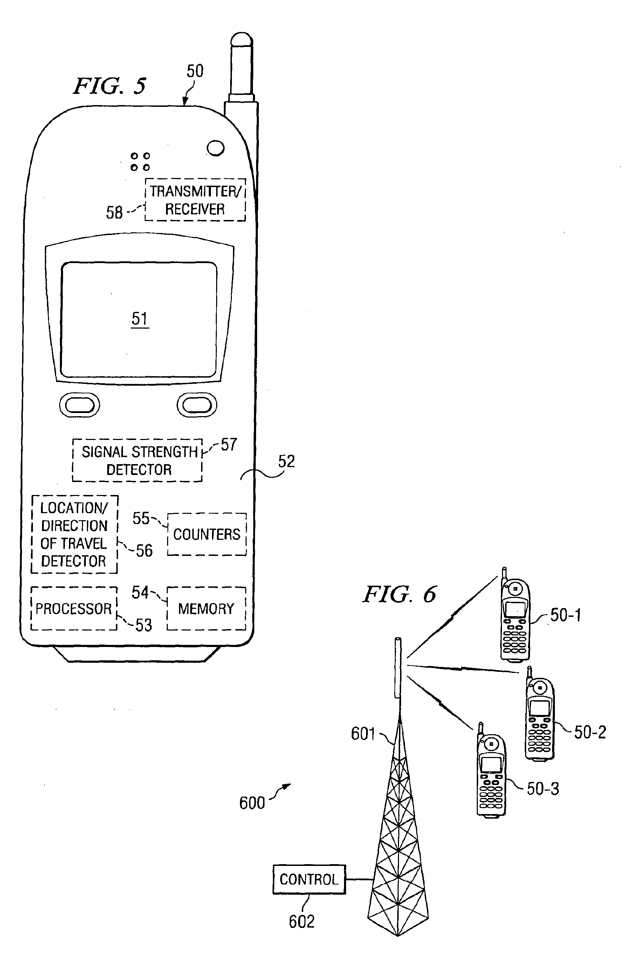

FIGURE 5 shows one example of a hand-held device 50. In the example, device 50 is a cellular phone having display 51, location detector 56, signal strength detector 57, processor 53, memory 54 and counters 55. Some or all of these elements may not be necessary or can be combined into one or more as desired. Note that the mobile device can be any type of device designed to receive wireless broadcast signals, such as, for example, cellular phones, PDAs, navigation systems, computers, vehicle control processors, etc.

FIGURE 6 shows RF system 600 having RF communication tower 601 controlled by control system 602. In the embodiment shown, RF tower 601 is a cellular tower communicating to cellular phones 50-1, 50-2 through 50-n. These cellular phones are mobile and can thus move throughout the coverage area or to other areas. As they each move, they will each contain, within the device, the incremented numbers recorded according to the system and method discussed above. Periodically, this information will be communicated to control system 702 for the purpose of allowing the central system to then determine problems within the coverage areas based upon actual occurring criteria as determined from mobile devices in the course of their normal end-user usage. Note that the home region of each device is defined based upon that device's actual movements, and thus, each home region will be different. This difference then assures that the entire coverage area is monitored.

This process evolves an ever-more-detailed image of the boundary of coverage holes, in bounded memory and using only 1-byte counters. The two main phases of determining the home region and determining holes could run concurrently or alternately, or by constantly updating the counts in the cache, perhaps at a slower rate, once the system has calculated a home location. Updating home location is necessary because the system might have made a wrong choice, or the user's behavior may have changed.

Although the present invention and its advantages have been described in detail, it should be understood that various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A method for determining coverage holes in a wireless communication system; said method comprising:
recording (303) within a mobile device locations within a particular coverage area in which a user of said mobile device ceases using an active communication connection;
recording (303) within said mobile device location within said particular coverage area in which said user of said mobile device becomes active on a communication connection; and
from time to time sending (600) said recorded cessation and initiation data to a wireless communication provider.

2. The method of claim 1 further comprising:
defining boundaries based on said recorded data.

3. The method of claim 2 wherein said boundaries are defined by said provider.

4. The method of claim 2 wherein said boundaries are used to infer the location of wireless coverage hole.

5. The method of claim 1 wherein said recorded cessation and initiation data is recorded in association with the direction of travel of said mobile device.

6. The method of claim 1 wherein said cessation recording and said initiation recording is with respect to cells within said coverage area, said method further comprising:
from time to time reassessing said cells.

7. A mobile device for receiving wireless signals; said device comprising:
a location detector (56); and
memory (54) for storing terminated and added communication connection indications corresponding to a plurality of detected locations of said mobile devices, said terminated and added communication connections controlled by a user of said mobile device.

8. The mobile device of claim 7 further comprising:
a direction of travel detector (56) and wherein each said stored terminated or added communication is stored in association with a detected direction of travel.

9. The mobile device of claim 8 wherein said device is one selected from the list of: cellular telephones, PDAs, computers, navigation systems, consumer devices, vehicle control processors.

10. The mobile device of claim 8 wherein each said terminated or added communication connection indication is an incremented count maintained within said device on a cell by cell basis, and on a direction of travel basis.
